# FASCICULE DE BREVET EUROPEEN

(11) **EP 4 110 503 B1**
(45) Date de publication et mention de la délivrance du brevet: **06.05.2026**
(21) Numéro de dépôt: 20710067.8
(22) Date de dépôt: 27.02.2020
(51) Int. Cl.: B01D 33/073, B01D 33/80, B01D 37/02

(54) **INSTALLATION POUR LA FILTRATION D'UNE SUSPENSION AU MOYEN D'UN FILTRE ROTATIF À PRÉ-COUCHE**
VORRICHTUNG FÜR DIE FILTRATION EINER SUSPENSION UNTER VERWENDUNG EINES ROTIERENDEN VORSCHICHTFILTERS
EQUIPMENT FOR THE FILTRATION OF A SUSPENSION USING A ROTARY PRECOAT FILTER

(43) Date de publication de la demande: 04.01.2023
(73) Titulaire: ECO3 BV, 2640 Mortsel (BE)
(72) Inventeur: ADAMI, Nicolas, 57155 MARLY (FR)
(74) Mandataire: De Clercq & Partners
(86) Numéro de dépôt international: PCT/EP2020/055083
(87) Numéro de publication internationale: WO 2021/170234

(56) Documents cités:
- FR-A- 1 084 015
- FR-A- 1 171 842
- GB-A- 339 636
- US-A- 2 715 466

## Description

La présente invention concerne une installation pour la filtration, au moyen d'un filtre rotatif, de liquides chargés de particules minérales ou organiques.

A l'heure actuelle, de nombreux secteurs d'activité intègrent des étapes de procédés supposant la mise en œuvre d'une solution de filtration permettant de purifier des produits liquides et/ou récupérer, à des fins diverses et variées, les substances solides en suspension dans ces derniers.

La solution consistant à cet effet à recourir à un ou plusieurs filtres rotatifs est connue et utilisée depuis de nombreuses années dans de nombreux domaines. De manière classique, la filtration sur filtre rotatif peut être simplement effectuée à l'aide d'une toile filtrante. Toutefois, pour des applications plus exigeantes nécessitant une filtration plus efficace et performante, il est également d'usage d'enrober au préalable le filtre rotatif d'une pré-couche formée de composés organiques et/ou minéraux présentant des propriétés filtrantes, et/ou absorbantes et/ou adsorbantes.

A ce propos, la pratique courante consiste à constituer la pré-couche filtrante, et/ou absorbante et/ou adsorbante sur la surface du filtre rotatif, directement dans la cuve destinée à la filtration, et d'injecter dans celle-ci le liquide chargé à filtrer dès que la pré-couche qui enrobe le filtre rotatif a atteint l'épaisseur requise par l'application.

Cette technique est très efficace, et actuellement largement répandue. Cependant, il a été observé qu'au début de la constitution de la pré-couche, ainsi qu'en fin de filtration, une certaine quantité de particules minérales et/ou organiques formant la pré-couche, est susceptible de migrer de cette dernière vers le liquide filtré. Bien qu'en général cette quantité de particules relarguées par la pré-couche est très faible, et ne pose pas de problèmes particuliers dans de nombreux cas, il existe cependant des applications pour lesquelles il convient de garantir qu'absolument aucune particule solide ne pourra venir contaminer le liquide filtré.

Ceci est par exemple le cas lors de la filtration, en vue de leur recyclage, de bains de gravure de plaques polymères destinées à l'impression par flexographie. En effet, les produits préconisés dans ce cas pour constituer la pré-couche de filtration recouvrant le filtre employé sont le plus souvent très abrasifs. Or, il suffit que deux ou trois particules se retrouvent dans le liquide filtré pour détruire totalement la qualité de la gravure et donc de l'impression ultérieure.

Une préoccupation similaire affecte le domaine de la filtration de liquides biologiques, tels que le sang humain, ou celui de la filtration de produits à usages médicamenteux, dans lesquels la pureté des produits finaux obtenus relève d'une nécessité vitale.

Bien que dans une moindre mesure, il en va par ailleurs de même en ce qui concerne le domaine de la filtration de liquides alimentaires, tels que certains alcools.

Le document FR1171842 propose dès lors de faire tremper une bande filtrante simultanément dans deux cuves séparées, l'une organisant la filtration et l'autre régénérant la bande filtrante par enrobage.

Dans ce contexte, la présente invention a pour but de proposer une solution de filtration par filtre rotatif à pré-couche, alternative à celles existantes, qui permette à la fois de filtrer un produit liquide chargé de substances solides de manière efficace et d'éviter toute présence de particules organiques et/ou minérales issues de la pré-couche dans le liquide filtré et par conséquent de garantir le degré de pureté de celui-ci.

A cet effet, la présente invention a pour objet une installation pour la filtration d'une suspension au moyen d'un filtre rotatif à pré-couche, comprenant une unité de filtration destinée à la mise en œuvre dudit filtre rotatif, comportant en outre une unité d'enrobage du filtre rotatif par la pré-couche, l'installation selon l'invention comportant des moyens de déplacement automatique du filtre rotatif entre lesdites unités de filtration et d'enrobage, l'unité d'enrobage et l'unité de filtration comportant chacune une cuve conçue apte à loger longitudinalement ledit filtre rotatif, ainsi que des moyens de détection de l'épaisseur de la pré-couche recouvrant le filtre rotatif.

Une caractéristique additionnelle de l'installation selon l'invention est définie par le fait qu'elle comporte en outre une unité de préparation d'une suspension destinée à la constitution de la pré-couche, ladite unité de préparation étant indépendante de ladite unité de filtration.

Conformément à une variante de réalisation préférentielle, l'unité de préparation comporte une cuve pourvue de moyens d'agitation et est reliée à l'unité d'enrobage par un circuit fluidique.

Selon une caractéristique de l'invention, ce dernier comporte un conduit d'alimentation et un conduit d'évacuation reliant la cuve de l'unité de préparation d'une suspension à la cuve de l'unité d'enrobage, chacun des conduits étant relié à une pompe conçue apte à permettre une circulation de la suspension destinée à la préparation de la pré-couche entre la cuve de l'unité de préparation et la cuve de l'unité d'enrobage et inversement.

D'autre part, il a également été imaginé dans le cadre de la présente invention que les moyens de déplacement automatique du filtre rotatif entre lesdites unités de filtration et d'enrobage comportent un premier et un second vérins pneumatiques reliés à l'arbre de rotation du filtre rotatif et conçus aptes à permettre un déplacement en translation du filtre rotatif respectivement le long d'un axe vertical perpendiculaire à son arbre de rotation et le long d'un axe horizontal perpendiculaire à son arbre de rotation.

Une autre caractéristique de l'installation selon l'invention est définie par le fait que l'unité de filtration est pourvue d'un moyen de raclage de la pré-couche filtrante enrobant le filtre rotatif, solidaire de la cuve qu'elle comporte.

Par ailleurs, la présente installation de filtration se caractérise encore en ce que la cuve de l'unité de filtration comporte un orifice d'entrée de la suspension à filtrer, ledit orifice d'entrée pouvant, le cas échéant être relié à un conduit d'arrivée de la suspension à filtrer, muni d'une pompe.

La description est à lire en relation avec le dessin annexé.

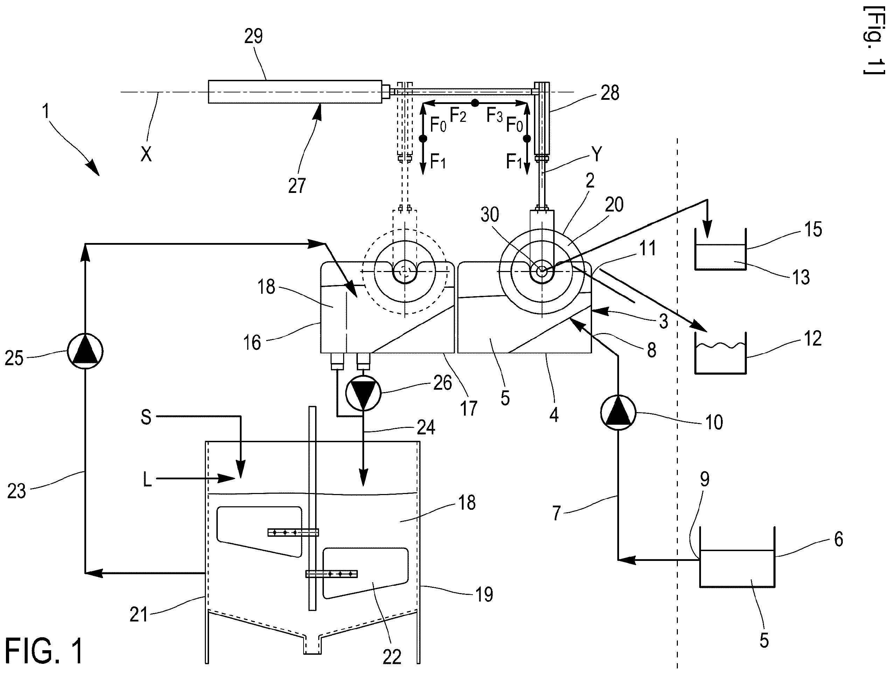

[Fig.1] est une vue schématique de l'installation selon l'invention, illustrant les deux positions (respectivement en traits pleins et en pointillés) pouvant être adoptées par le filtre rotatif à pré-couche qu'elle comporte.

Tel qu'illustré à la figure 1, dans la variante de réalisation illustrée, l'installation 1 de filtration d'une suspension selon l'invention comporte un filtre rotatif 2 à pré-couche 20 destiné à être mis en œuvre au sein d'une unité de filtration 3.

Cette dernière est constituée d'une cuve 4 conformée pour loger longitudinalement le filtre rotatif 2 et pour recevoir la suspension 5 à filtrer.

Comme illustré sur la figure 1, dans la variante de réalisation illustrée, la suspension 5 à filtrer est transférée depuis un réservoir de stockage 6 vers la cuve 4 au travers d'un conduit 7, relié à un orifice d'entrée 8 de la cuve 4 et à un orifice de sortie 9 du réservoir de stockage 6. La suspension 5 est mise en circulation dans le conduit 7 au travers d'une pompe 10.

L'unité de filtration 3 comporte par ailleurs une lame raclante 11 permettant de désépaissir progressivement la pré-couche 20 et ainsi d'évacuer, par exemple vers un container 12, les particules solides initialement contenues dans la suspension 5 et retenues dans la pré-couche 20.

Le liquide purifié 13 issu de la filtration de la suspension 5 est évacué au niveau de la canalisation centrale 14 du filtre rotatif 2 et recueilli dans un contenant 14.

La filtration est automatiquement stoppée après détection d'une certaine épaisseur de la pré-couche 20, par un capteur dédié (non illustré) que comporte l'unité de filtration 3.

Conformément à l'invention, l'installation 1 comporte en outre une unité d'enrobage 16, indépendante de l'unité de filtration 3, et dans laquelle est constituée la pré-couche 20 recouvrant le filtre rotatif 2, préalablement à la mise en œuvre de celui-ci lors de la filtration.

A cet effet, l'unité d'enrobage 16 comporte une cuve 17, également conformée pour loger longitudinalement le filtre rotatif 2 et pour recevoir une suspension 18 destinée à constituer ladite pré-couche 20.

A ce propos, l'installation de filtration 1 est pourvue d'une unité de préparation 19 de la suspension 18, constituée d'une cuve 21, munie d'un agitateur 22, dans laquelle peuvent être introduit le produit liquide L et la substance solide S qui serviront à constituer la pré-couche 20. La cuve 21 est reliée à la cuve 17 de l'unité d'enrobage 16 par un circuit fluidique comportant un conduit aller 23 et un conduit retour 24, tous deux munis d'une pompe 25, 26.

En référence à la figure 1, l'installation 1 selon l'invention comporte en outre un système 27 de déplacement automatique du filtre rotatif 2 entre les unités de filtration 3 et d'enrobage 16. Ce système 27 est constitué d'un premier et d'un second vérins pneumatiques 28, 29 reliés à l'arbre de rotation du filtre rotatif 2 et conçus aptes à permettre un déplacement en translation de ce dernier respectivement dans les deux directions le long d'un axe vertical Y (flèches F0, F1) perpendiculaire à son arbre de rotation et dans les deux directions le long d'un axe horizontal X (flèches F2, F3) perpendiculaire à son arbre de rotation.

En pratique, l'installation selon l'invention peut par exemple être appliquée au recyclage de bains de gravure de plaques polymères destinées à l'impression par flexographie, cette opération supposant une totale élimination des polymères en suspension dans les bains pour garantir la qualité des plaques réalisées ultérieurement au moyen de ces mêmes bains.

La mise en œuvre de l'installation 1 suppose de recouvrir d'abord le filtre rotatif 2 de sa pré-couche 20. A cet effet, une suspension d'enrobage 18 de composition appropriée est préalablement préparée dans la cuve 21 de l'unité de préparation 19. Lorsqu'elle est homogène et a atteint la concentration recherchée, elle est transférée dans la cuve 17 de l'unité d'enrobage 16, dans laquelle le filtre rotatif 2 a d'ores et déjà été disposé. Celui-ci est alors actionné et mis en rotation jusqu'à ce que l'épaisseur de la pré-couche 20, mesurée au moyen d'un capteur (non illustré) que comporte l'unité d'enrobage 16, atteint la dimension recherchée.

Lorsque l'opération de réalisation de la pré-couche 20 est terminée, le filtre rotatif 2 est déplacé au moyen des vérins 28, 29 depuis l'unité d'enrobage 16 vers l'unité de filtration 3 dont la cuve 4 contient une suspension 5 à filtrer, par exemple un bain de gravure de plaques polymères. Au fur et à mesure de l'opération de filtration, les particules solides contenues dans la suspension 5 sont retenues dans la pré-couche 20 du filtre rotatif 2. Elles sont progressivement évacuées vers le container 12 par raclage permanent de la pré-couche 20 au moyen de la lame raclante 11 tout au long du processus de filtration.

Comme indiqué ci-dessus, la filtration est stoppée automatiquement lorsque l'épaisseur de la pré-couche 20 atteint une valeur prédéfinie détectée par le capteur dont est équipée l'unité de filtration 3. Le filtre rotatif 2 est alors retransféré vers l'unité d'enrobage 16 pour y être nettoyé en vue d'un nouveau cycle de formation de la pré-couche 20, pouvant être suivie d'une nouvelle phase de filtration.

Il ressort clairement de ce qui précède que grâce à la présence d'une unité d'enrobage 16, totalement indépendante de l'unité de filtration 3, l'installation 1 selon l'invention permet de garantir qu'aucune particule solide destinée à constituer la pré-couche 20 du filtre rotatif 2 ne peut venir polluer la suspension à filtrer 5. En effet, les étapes de préparation de la pré-couche 20 et de filtration sont ainsi totalement dissociées et la suspension 5 à filtrer n'est jamais en contact avec la suspension 18 destinée à former la pré-couche 20. Le fait que l'installation 1 comporte également une unité de préparation 19 de la suspension d'enrobage 18 indépendante de l'unité de filtration 3 participe en outre à l'obtention de cet avantage.

## Revendications

1. Installation (1) pour la filtration d'une suspension (5) au moyen d'un filtre rotatif (2) à pré-couche (20), comprenant une unité de filtration (3) destinée à la mise en œuvre dudit filtre rotatif (2), comportant en outre une unité d'enrobage (16) du filtre rotatif (2) par la pré-couche (20), **caractérisée en ce qu'**elle comporte des moyens de déplacement automatique du filtre rotatif (2) entre lesdites unités de filtration (3) et d'enrobage (16), l'unité d'enrobage (16) et l'unité de filtration (3) comportent chacune une cuve (4, 17) conçue apte à loger longitudinalement ledit filtre rotatif (2) ainsi que des moyens de détection de l'épaisseur de la pré-couche (20) recouvrant le filtre rotatif (2).

2. Installation (1) selon la revendication précédente, **caractérisée en ce qu'**elle comporte en outre une unité de préparation (19) d'une suspension (18) destinée à la constitution de la pré-couche (20), ladite unité de préparation (19) étant indépendante de ladite unité de filtration (3).

3. Installation (1) selon la revendication 2, **caractérisée en ce que** ladite unité de préparation (19) comporte une cuve (21) pourvue de moyens d'agitation (22) et reliée à ladite unité d'enrobage (16) par un circuit fluidique.

4. Installation (1) selon la revendication 3, **caractérisée en ce que** le circuit fluidique comporte un conduit d'alimentation (23) et un conduit d'évacuation (24) reliant la cuve (21) de l'unité de préparation (19) d'une suspension (18) à la cuve (17) de l'unité d'enrobage (16), chacun des conduits (23, 24) étant relié à une pompe (25, 26) conçue apte à permettre une circulation de la suspension (18) destinée à la préparation de la pré-couche (20) entre la cuve (21) de l'unité de préparation (19) et la cuve (17) de l'unité d'enrobage (16) et inversement.

5. Installation (1) selon l'une quelconque des revendications 1 à 4, **caractérisée en ce que** les moyens de déplacement automatique du filtre rotatif (2) entre lesdites unités de filtration (3) et d'enrobage (16) comportent un premier et un second vérins pneumatiques(28, 29) reliés à l'arbre de rotation (30) du filtre rotatif (2) et conçus aptes à permettre un déplacement en translation du filtre rotatif (2) respectivement le long d'un axe vertical (Y) perpendiculaire à son arbre de rotation (30) et le long d'un axe horizontal (X) perpendiculaire à son arbre de rotation (30).

6. Installation (1) selon l'une quelconque des revendications 1 à 5, **caractérisée en ce que** l'unité de filtration (3) est pourvue d'un moyen de raclage (11) de la pré-couche filtrante (20) enrobant le filtre rotatif (2), solidaire de la cuve (4) qu'elle comporte.

7. Installation (1) selon l'une quelconque des revendications 1 à 6, **caractérisée en ce que** la cuve (4) de l'unité de filtration (3) comporte un orifice d'entrée (8) de la suspension (5) à filtrer.

8. Installation (1) selon la revendication 7, **caractérisée en ce que** l'orifice d'entrée (8) est relié à un conduit d'arrivée (7) de la suspension à filtrer (5) muni d'une pompe (10).

## Patentansprüche

1. Anlage (1) zur Filtration einer Suspension (5) mittels eines rotierenden Filters (2) mit Vorschicht (20), umfassend eine Filtrationseinheit (3), die dazu bestimmt ist, das rotierende Filter (2) einzusetzen, beinhaltend ferner eine Beschichtungseinheit (16) zur Beschichtung des rotierenden Filters (2) mit der Vorschicht (20), **dadurch gekennzeichnet, dass** sie Mittel zur automatischen Verlagerung des rotierenden Filters (2) zwischen der Filtrationseinheit (3) und der Beschichtungseinheit (16) beinhaltet, wobei die Beschichtungseinheit (16) und die Filtrationseinheit (3) jeweils einen Behälter (4, 17) aufweisen, der dazu ausgelegt ist, das rotierende Filter (2) längs aufzunehmen, sowie Mittel zum Detektieren der Dicke der Vorschicht (20), die das rotierende Filter (2) bedeckt.

2. Anlage (1) nach dem vorhergehenden Anspruch, **dadurch gekennzeichnet, dass** sie ferner eine Vorbereitungseinheit (19) zum Vorbereiten einer Suspension (18) umfasst, die zum Bilden der Vorschicht (20) bestimmt ist, wobei die Vorbereitungseinheit (19) von der Filtrationseinheit (3) unabhängig ist.

3. Anlage (1) nach Anspruch 2, **dadurch gekennzeichnet, dass** die Vorbereitungseinheit (19) einen Behälter (21) umfasst, der mit Rührmitteln (22) versehen ist und mit der Beschichtungseinheit (16) über einen Fluidkreislauf verbunden ist.

4. Anlage (1) nach Anspruch 3, **dadurch gekennzeichnet, dass** der Fluidkreislauf ein Zuführleitung (23) und eine Abführleitung (24) umfasst, die den Behälter (21) der Vorbereitungseinheit (19) zum Vorbereiten einer Suspension (18) mit dem Behälter (17) der Beschichtungseinheit (16) verbinden, wobei jede der Leitungen (23, 24) mit einer Pumpe (25, 26) verbunden ist, die geeignet ausgelegt ist, eine Zirkulation der zur Vorbereitung der Vorschicht (20) bestimmten Suspension (18) zwischen dem Behälter (21) der Vorbereitungseinheit (19) und dem Behälter (17) der Beschichtungseinheit (16) und umgekehrt zu ermöglichen.

5. Anlage (1) nach einem der Ansprüche 1 bis 4, **dadurch gekennzeichnet, dass** die Mittel zur automatischen Verlagerung des rotierenden Filters (2) zwischen der Filtrationseinheit (3) und der Beschichtungseinheit (16) einen ersten und einen zweiten Pneumatikzylinder (28, 29) beinhalten, die mit der Rotationswelle (30) des rotierenden Filters (2) verbunden sind und geeignet ausgelegt sind, um eine translatorische Verlagerung des rotierenden Filters (2) entlang einer vertikalen Achse (Y) senkrecht zu seiner Rotationswelle (30) beziehungsweise entlang einer horizontalen Achse (X) senkrecht zu seiner Rotationswelle (30) zu ermöglichen.

6. Anlage (1) nach einem der Ansprüche 1 bis 5, **dadurch gekennzeichnet, dass** die Filtrationseinheit (3) mit einem Abstreifmittel (11) zum Abstreifen der filternden Vorschicht (20), mit der das rotierende Filter (2) beschichtet ist, versehen ist, das mit dem Behälter (4), den sie beinhaltet, fest verbunden ist.

7. Anlage (1) nach einem der Ansprüche 1 bis 6, **dadurch gekennzeichnet, dass** der Behälter (4) der Filtrationseinheit (3) eine Einlassöffnung (8) für die zu filternde Suspension (5) umfasst.

8. Anlage (1) nach Anspruch 7, **dadurch gekennzeichnet, dass** die Einlassöffnung (8) mit einer Zuleitung (7) für die zu filternde Suspension (5) verbunden ist, die mit einer Pumpe (10) ausgestattet ist.

## Claims

1. Installation (1) for the filtration of a suspension (5) by means of a rotary filter (2) with a precoat (20), comprising a filtration unit (3) intended for the implementation of said rotary filter (2), further comprising a unit (16) for coating the rotary filter (2) with the precoat (20), **characterized in that** it comprises means for automatic movement of the rotary filter (2) between said filtration unit (3) and coating unit (16), the coating unit (16) and the filtration unit (3) each comprise a vessel (4, 17) designed to be able to longitudinally house said rotary filter (2) and also means for detecting the thickness of the precoat (20) covering the rotary filter (2).

2. Installation (1) according to the preceding claim, **characterized in that** it further comprises a unit (19) for preparing a suspension (18) intended to constitute the precoat (20), said preparation unit (19) being independent of said filtration unit (3).

3. Installation (1) according to Claim 2, **characterized in that** said preparation unit (19) comprises a vessel (21) provided with stirring means (22) and connected to said coating unit (16) by a fluidic circuit.

4. Installation (1) according to Claim 3, **characterized in that** the fluidic circuit comprises a feed pipe (23) and a discharge pipe (24) connecting the vessel (21) of the unit (19) for preparing a suspension (18) to the vessel (17) of the coating unit (16), each of the pipes (23, 24) being connected to a pump (25, 26) designed to be able to allow circulation of the suspension (18) intended for the preparation of the precoat (20) between the vessel (21) of the preparation unit (19) and the vessel (17) of the coating unit (16) and vice versa.

5. Installation (1) according to any one of Claims 1 to 4, **characterized in that** the means for automatic movement of the rotary filter (2) between said filtration unit (3) and coating unit (16) comprise a first and a second pneumatic cylinder (28, 29) connected to the rotation shaft (30) of the rotary filter (2) and designed to be able to allow a translational movement of the rotary filter (2) respectively along a vertical axis (Y) perpendicular to its rotation shaft (30) and along a horizontal axis (X) perpendicular to its rotation shaft (30).

6. Installation (1) according to any one of Claims 1 to 5, **characterized in that** the filtration unit (3) is provided with a means (11) for scraping the filtering precoat (20) coating the rotary filter (2), which is as one with the vessel (4) that said filtration unit comprises.

7. Installation (1) according to any one of Claims 1 to 6, **characterized in that** the vessel (4) of the filtration unit (3) comprises an inlet orifice (8) for the suspension (5) to be filtered.

8. Installation (1) according to Claim 7, **characterized in that** the inlet orifice (8) is connected to an inflow pipe (7) for the suspension to be filtered (5), provided with a pump (10).
